# EUROPEAN PATENT APPLICATION

(11) **EP 4 838 356 A1**
(43) Date of publication of application: **11.11.2026**
(21) Application number: 25215102.2
(22) Date of filing: 11.11.2025
(51) Int. Cl.: G06F 9/451, G06F 16/26, G06T 11/26, G06F 16/904

(54) **COMPUTER-IMPLEMENTED METHOD FOR GENERATING A GRAPHIC USER INTERFACE COMPRISING AN INTERACTIVE GRAPHIC SCATTERPLOT**

(30) Priority: 06.05.2025 PT 2025120246
(71) Applicant: Feedzai - Consultadoria e Inovação Tecnológica, S.A., 3030-199 Coimbra (PT)
(72) Inventor: NARCISO DE SOUSA, João Bernardo, 3030-199 Coimbra (PT); MARQUES COSTA, Rita, 3030-199 Coimbra (PT); SANTOS RODRIGUES BIZARRO, Pedro Gustavo, 3030-199 Coimbra (PT); PARREIRA E SILVA, Pedro Nuno, 3030-199 Coimbra (PT); MATEUS PALMEIRO, João Maria, 3030-199 Coimbra (PT)
(74) Representative: Patentree

(57) **Abstract**

Computer-implemented method, and computer system thereof, for generating a Graphic User Interface, GUI, comprising an interactive graphic scatterplot for a transactional dataset on a computer system, wherein the GUI has a predetermined display resolution defined in pixels and said transaction dataset comprising a plurality of transactions comprising two fields each defining a visualisation dimension of the interactive graphic scatterplot, the method comprising the steps of: receiving from a user of the computer system a first range selection for a first dimension of the interactive graphic scatterplot and a second range selection for a second dimension of the interactive graphic scatterplot; retrieving transactions comprised by a tree data-structure from the transactional dataset within said first range selection for the first dimension and within said second range selection for the second dimension, and wherein the tree data-structure comprises a plurality of node-depth levels, each node-depth level comprising a plurality of nodes, each node comprising a subset of said transactions; and displaying each retrieved transaction as a corresponding data point on said interactive graphic scatterplot with a display opacity, wherein the display opacity is determined as a function of a node-depth level of a node comprising each retrieved transaction.

## Description

### TECHNICAL FIELD

The present disclosure relates to a computer-implemented method for generating a Graphic User Interface, GUI, comprising an interactive graphic scatterplot for a transactional dataset on a computer system.

### BACKGROUND

Institutions process billions of transactions (e.g., transaction of industrial and/or commercial goods/products, monetary transactions) annually, relying on Machine Learning models and rule-based systems to detect malicious and/or non-compliant activity in real-time. Professionals working with large-scale datasets require tools to explore said datasets in detail, to refine detection methods and uncover hidden patterns. Existing tools fail to support interactive exploration of these transactions in a single view without aggregations, potentially obscuring critical insights.

Institutions process billions of transactions (e.g., transaction of industrial and/or commercial goods/products, monetary transactions) every year. A small fraction of those are manually reviewed by analysts, who must sort the non-compliant from the legitimate. But the vast majority go through the system - either automatically blocked or automatically approved - without being individually reviewed. This is usually made possible by Machine Learning models, rule systems, or a combination of both. Tasks like model training, creation and maintenance of rules, and monitoring transactional patterns require different analysts to explore very large datasets made up of billions of transactions.

In their monitoring activity, users who review this kind of data use different software depending on their technical skills and job function. Transaction analysts resort to spreadsheet software (e.g. Microsoft Excel); business analysts use dashboards (e.g. Tableau [11]); and data scientists leverage Python packages such as PySpark [24], pandas [16], or NumPy [10]. For data scientists in particular, working with data is not a linear activity but an iterative collaborative process that involves shaping, curating, and even creating data [14]. Despite the rich set of tools that different users have, their approaches typically rely on data aggregation, limiting the ability to explore hyper-granular patterns across millions of transactions in a single view.

These limitations mean, for example, that it is hard to visualize complex, large datasets without performing aggregations that potentially hide relevant patterns and outliers, and might hinder the understanding of emerging trends, unusual behaviors, data anomalies, and outliers.

Here, recent trends in fraud visualization are detailed, emphasizing the integration of interactive analytics with statistical insights. In addition, advances in high-granularity visualization techniques are discussed for large datasets and the impact of interface design principles on effective data exploration and analysis.

Recent trends in pattern (and outlier) visualization methods emphasize the integration of interactive analytics with statistical insights, to uncover hidden patterns in high-dimensional data. Arleo et al. [4] demonstrate that incremental domain knowledge, which gradually reveals finer details as users explore the data, can significantly enhance the detection of subtle anomalies in transactional records. Similarly, Maçãs et al. [13] introduced methods that merge detailed transaction views with network diagrams, exposing interconnections among accounts and uncovering clusters corresponding to outlier instances (i.e., instances of misconduct). These studies highlight that high-resolution visualization must be paired with robust interaction techniques, to enable analysts to discern not only isolated non-compliant transactions, but also the intricate networks in which they are embedded [7]. The integration of mobile money fraud detection further illustrates how real-time data analysis and visualization techniques enable investigators to monitor and react quickly to emerging threats [3]. Explorations into metaverse technology for fraud detection suggest that immersive network visualizations can expose multilayered fraudulent schemes that traditional approaches might miss [25].

Although these approaches introduce important advances in outlier transaction detection, they often rely on aggregated views or specialized network representations that may obscure hyper-granular details essential for uncovering emerging patterns pertaining to malicious transactions. Additionally, most existing tools lack a flexible mechanism for seamlessly shifting between different levels of granularity in the data.

In the context of visualizing large datasets with high granularity, Steiner's dissertation on Scalable Visualization of Large Datasets [22] addresses the challenges posed by the exponential growth of datasets in a number of areas, which often consist of hundreds of millions or even billions of points. Steiner emphasizes the need for scalable visualization systems to handle such massive datasets interactively and explores various strategies to optimize resource utilization and reduce bandwidth requirements.

A relevant example of a system that addresses these challenges is Firefly [9], a browser-based interactive tool that allows the user to render and interact with large-scale 3D datasets. It employs WebGL and an octree-based progressive rendering approach to visualize millions of points. Other tools have emerged to handle massive datasets. Datashader [5] aggregates data into pixels, enabling interactive visualization of billions of points; Kyrix-S [23] allows the authoring of scalable scatterplot visualizations with multi-zoom levels, supporting interactive browsing of billions of objects; Jupyter Scatter [12] integrates with Jupyter Notebook environments to render up to 20 million points interactively for exploratory analysis; Highcharts [1] Boost Module leverages GPU acceleration to render charts with millions of data points in the browser; and Plotly Scattergl [2] utilizes WebGL for interactive plotting of dense datasets. While these tools offer diverse approaches to managing large-scale data, they each provide complementary capabilities, ranging from highly specialized pixel aggregation to dynamic, multilevel interactive exploration, critical for applications that demand hyper-granular views without resorting to data aggregations that might hide subtle patterns.

The following pertains to the prior art on Interface design related to transaction analysis computer methods. Shneiderman's [21] seminal work introduces the "visual information seeking mantra", emphasizing a structured approach to information visualization: "overview first, zoom and filter, then details on demand". This methodology has significantly shaped the design of interactive visualization systems.

Recent studies by Sarikaya et al. offer frameworks for designing scatterplots and summary visualizations. In Scatterplots: Tasks, Data and Designs [19], they examine how scatterplot designs facilitate analytic tasks like identifying outliers and comparing patterns, highlighting trade-offs between detail and scalability. In parallel, Design Factors for Summary Visualization in Visual Analytics [20] categorizes summarization methods, including aggregation, filtering, and projection, to effectively transform large datasets for analysis. However, these studies mostly address scatterplots and summary visualizations independently, without sufficiently investigating interaction techniques that seamlessly integrate the two.

These facts are disclosed in order to illustrate the technical problem addressed by the present disclosure.

### GENERAL DESCRIPTION

The present disclosure relates to a computer-implemented method for generating a Graphic User Interface, GUI, comprising an interactive graphic scatterplot for a transactional dataset on a computer system.

The present disclosure relates to a visualization interactive interface designed to empower outlier detection specialists by offering a hypergranular view of transactional data. Unlike traditional aggregation-based approaches, the present disclosure represents all individual data points with varying opacity, transforming undistinguishable blobs into "clouds of light" where density is encoded as brightness - ultimately helping uncover hidden patterns. Leveraging rendering and dynamic filtering mechanisms, a preferential embodiment enables fast drawing navigation through datasets of up to tens of millions of events that can be seen all at the same time on the screen. The present disclosure is tailored for the interactive exploration of transactions while, at the same time, the disclosure provides insights that allow users to understand and compare data selections dynamically. An embodiment if the disclosed may contribute to how analysts interact with and interpret transactional data, ultimately improving the detection of malicious and/or non-compliant transactions.

The present disclosure relates to a computer system and computer-implemented method to support the data understanding. By providing a hyper-granular view in which each transaction is individually represented, the present disclosure enables users to detect anomalies, identify trends, and interactively explore vast datasets with precision.

In an embodiment, and at a macro level, the present disclosure provides a detailed representation of transactions, allowing users to recognize overarching patterns and detect anomalies at a glance. Distinctive shapes and clusters emerge, and overplotted areas are made evident by the varying levels of transparency of the data points, revealing key insights such as periodic transaction spikes, potential processing issues, or behavioral trends tied to daily transactional activity. As users interact with the system and zoom in, granular details become more apparent, facilitating a deeper investigation of specific anomalies.

The present disclosure visualizes transactions by presenting data without aggregation and supporting interactive exploration.

The present disclosure addresses the limitations found in pattern and outlier visualization methods, by enabling a direct, hyper-granular exploration of transactional data without aggregation. Unlike prior approaches that primarily rely on statistical summaries, network visualizations, or automated clustering, the present disclosure allows analysts to visualize millions of individual transactions in the light plot, while retaining the ability to zoom in and apply precise filters interactively. This ensures that even subtle anomalies, such as outlier transactions that might be diluted in aggregated views, can be identified and investigated in detail.

An embodiment seamlessly integrates multiple interactive modalities, including dynamic filtering and parallel aggregated statistics, allowing users to effortlessly transition from detailed data exploration to high-level statistical analysis. This comprehensive approach enables analysts to uncover subtle patterns and anomalies within millions of transaction instances, ultimately enhancing the detection and understanding of malicious activities.

An embodiment provides a highly interactive interface design environment, in which users can seamlessly move between summary statistics and granular data points. It goes beyond traditional scatterplots by employing a technique that renders points at the pixel level with transparency, translating overall brightness into density; in essence, a sort of "light plot". The point opacity adjusts automatically, but can also be manually defined to further reduce noise according to user preferences. Unlike traditional approaches where scatterplots and summary visualizations operate in isolation, an embodiment integrates them into a dynamic, bidirectional exploration experience. Users can drill into subsets of data by drawing selections on the plot, which dynamically updates the summary statistics. Interacting with summary visualizations, in turn, creates filters that are immediately visible on the light plot. This ensures that users can validate hypotheses, uncover anomalies, and navigate large transaction datasets efficiently without losing context. By enabling quick shifts between different levels of detail, an embodiment enhances non-compliant detection workflows, making pattern discovery and anomaly detection more intuitive.

The present disclosure relates to a computer-implemented method for generating a Graphic User Interface, GUI, comprising an interactive graphic scatterplot for a transactional dataset on a computer system, wherein the GUI has a predetermined display resolution defined in pixels and said transaction dataset comprising a plurality of transactions comprising two fields each defining a visualisation dimension of the interactive graphic scatterplot, the method comprising the steps of:
receiving from a user of the computer system a first range selection for a first dimension of the interactive graphic scatterplot and a second range selection for a second dimension of the interactive graphic scatterplot;
retrieving transactions comprised by a tree data-structure from the transactional dataset within said first range selection for the first dimension and within said second range selection for the second dimension, and wherein the tree data-structure comprises a plurality of node-depth levels, each node-depth level comprising a plurality of nodes, each node comprising a subset of said transactions;
displaying each retrieved transaction as a corresponding data point on said interactive graphic scatterplot with a display opacity, wherein the display opacity is determined as a function of a node-depth level of a node comprising each retrieved transaction.

In an embodiment, the display opacity is determined as a monotonically-increasing function of node-depth level, in particular wherein the display opacity is determined as a monotonically-increasing logarithmic function of node-depth level.

In an embodiment, the display opacity comprises obtaining an opacity ratio of $logDepthRatio = \frac{log \left(depthRatio∗K+1\right)}{log \left(K+1\right)} , wherein depthRatio = \frac{nodeDepth}{maxDepth} ;$ wherein *nodeDepth* is a node-depth level of the node comprising each retrieved transaction, *maxDepth* is a maximum node-depth level of the tree data-structure, and *K* is a constant defining a gradient of the monotonically-increasing logarithmic function.

In an embodiment, the display opacity is obtained by $opacity = \left\{\begin{matrix}baseOpacity , if the node is not a leaf in the tree data - structure \\ baseOpacity ∗ leafMultiplier , if the node is a leaf in the tree data - structure\end{matrix}\right. ,$ where *baseOpacity* is a default display opacity for data points in nodes of a certain node-depth level in the tree data-structure, and *leaf Multiplier* is an opacity-multiplier for data points in nodes that are a leaf in the tree data-structure.

An embodiment further comprises detecting a hover point over any part of the interactive graphic scatterplot, detecting a scroll wheel input from the user to enlarge or reduce the interactive graphic scatterplot while hovering over said detected hover point, and displaying the interactive graphic scatterplot with a corresponding enlargement or reduction, thus redefining the first range selection for the first dimension of the interactive graphic scatterplot and redefining the second range selection for the second dimension of the interactive graphic scatterplot, in particular, wherein displaying the interactive graphic scatterplot with a corresponding reduction comprises limiting the first range selection within the received first range selection and limiting the second range selection within the received second range selection.

In an embodiment, the opacity-multiplier of nodes, *leaf Multiplier,* and the default display opacity for points in nodes of a certain node-depth level in the tree data-structure, *baseOpacity,* are a function of said enlargement or reduction of the interactive graphic scatterplot and are obtained by: $\begin{matrix}leafMultiplier \\ = MinLeafMultiplier + zoomFactor ∗ \left(\begin{matrix}MaxLeafMultiplier \\ - MinLeafMultiplier\end{matrix}\right) , and \\ baseOpacity = maxOpacity - logDepthRatio ∗ \left(maxOpacity-minOpacity\right) ,\end{matrix}$ where:
*MinLeafMultiplier* is a minimum opacity-multiplier of nodes;
*MaxLeafMultiplier* is a maximum opacity-multiplier of nodes;
*minOpacity* is a minimum display opacity for a current zoom-level, *zoomlevel;*
*maxOpacity* is a maximum display opacity for the current zoom-level, *zoomlevel;*
where the minimum and maximum display opacities are obtained by $maxOpacity = {MaxOpacity}_{initial} + zoomFactor ∗ \left(TargetOpacity-{MaxOpacity}_{initial}\right) ,$ $minOpacity = {MinOpacity}_{initial} + zoomFactor ∗ \left(TargetOpacity-{MinOpacity}_{initial}\right) ,$ $zoomFactor = \frac{zoomLevel - 1}{MaxZoom - 1} ,$ wherein where:
   *MinOpacityᵢₙᵢₜᵢₐₗ*is a minimum display opacity when the retrieved transactions are displayed as corresponding data points on the interactive graphic scatterplot;
*MaxOpacityᵢₙᵢₜᵢₐₗ* is a maximum display opacity when the retrieved transactions are displayed as corresponding data points on the interactive graphic scatterplot;
*MaxZoom* is a maximum zoom-level when the interactive graphic scatterplot is fully enlarged; and
*TargetOpacity* is a limit display opacity when the interactive graphic scatterplot is fully enlarged.

An embodiment further comprises:
receiving from the user a two-dimensional selection within the displayed interactive graphic scatterplot;
selecting each of the displayed transactions that have a corresponding data point in the two-dimensional selection within the interactive graphic scatterplot; and
displaying each of the selected transactions as a corresponding data point on the two-dimensional selection within the interactive graphic scatterplot with a display opacity, wherein the display opacity is determined as a function of a node-depth level of a node comprising each retrieved transaction;
wherein the intensity or colour is different depending on if the retrieved transaction is within the two-dimensional selection.

In an embodiment, each said transaction is comprised in one or more classes, and said method further comprises displaying each transaction as a data point within the interactive graphic scatterplot, wherein the intensity or colour of the datapoint is determined as a function of the corresponding transaction being comprised in a preselected class.

In an embodiment, each said transaction is comprised in one or more classes, and said method further comprises displaying a transaction region-indicator on said interactive graphic scatterplot, wherein said transaction region-indicator is placed bounding a region of the interactive graphic scatterplot bounding data points corresponding to transactions comprised in a preselected class.

In an embodiment, the first range selection and the first range selection have predetermined values for the interactive graphic scatterplot.

In an embodiment, the two fields of each transaction of the plurality of retrieved transactions comprise a corresponding amount and a corresponding time instance of said transaction.

In an embodiment, the first dimension is a time dimension, and wherein the second dimension is an amount dimension, in particular the interactive graphic scatterplot comprising a horizontal axis pertaining to the time dimension, and a vertical axis pertaining to the amount dimension.

An embodiment comprises the preparatory steps of:
retrieving transactions from the transactional dataset; and
obtaining said tree data-structure from the retrieved transactions by distributing the retrieved transactions by nodes of the tree data-structure such that it balances a number of transactions per each node of the tree data-structure.

An embodiment comprises the step of displaying, for each of the selected transactions as a data point on the two-dimensional selection within the interactive graphic scatterplot, a first guiding-line and a second guiding-line connecting each of the selected transactions, respectively, to a scatterplot axis of the first dimension and a scatterplot axis of the second dimension, said first and second guiding-lines having the same intensity or colour of the data points corresponding to selected transactions.

An embodiment comprises detecting a user drag input along a user-defined displacement on the interactive graphic scatterplot to move the interactive graphic scatterplot in said user-defined displacement, thus redefining the first range selection for the first dimension of the interactive graphic scatterplot and redefining the second range selection for the second dimension of the interactive graphic scatterplot, and to update the displaying of each of the retrieved transactions as a data point on said interactive graphic scatterplot.

An embodiment further comprises displaying a histogram count of the plurality of retrieved transactions in respect of a visualisation dimension of the interactive graphic scatterplot.

An embodiment further comprises displaying an additional histogram count of the plurality of retrieved transactions in respect of another visualisation dimension of the interactive graphic scatterplot.

An embodiment further comprises displaying an overlapping histogram with the selected transactions from the two-dimensional selection of the user, wherein the intensity or colour of the overlapping histogram of the selected transactions is different than a histogram of the retrieved transactions.

An embodiment further comprises a step of displaying each of the retrieved transactions outside the two-dimensional selection of the user as a darker intensity or as a darker colour, and displaying each of the retrieved transactions inside the two-dimensional selection of the user as a lighter intensity or as a lighter colour.

In an embodiment, the step of retrieving transactions from the transactional dataset further comprises the step of storing the retrieved transactions in a volatile memory and the method comprises using the stored transactions in the volatile memory for displaying the retrieved transactions.

An embodiment further comprises displaying by the GUI characteristics of the plurality of retrieved and/or selected transactions, such as a total number of transactions, a total amount of transactions and/or amount of non-compliant transactions and/or one or more histograms of characteristics of the plurality of retrieved and/or selected transactions.

An embodiment further comprises receiving from the user the two-dimensional selection causes the GUI to update the provided characteristics of the plurality of transactions according to said two-dimensional selection.

An embodiment further comprises receiving from the user the two-dimensional selection which causes the GUI to update the displayed histogram or histograms according to said two-dimensional selection.

An embodiment further comprises displaying a reference matrix on top of the interactive graphic scatterplot, wherein the non-compliant transaction region-indicator matches one or more cells of the reference matrix.

An embodiment further comprises displaying an heatmap plot, said heatmap plot comprising one or more heatmap cells partitioned for a first dimension unit and/or a second dimension unit, each of the one or more heatmap cells corresponding to a respective region of the interactive graphic scatterplot, and each of the one or more heatmap cells being encoded as a function of the number of non-compliant transactions in the respective region of the interactive graphic scatterplot.

An embodiment further comprises automatically adjusting the intensity or colour of the coincident pixels to enhance contrast of the scatterplot.

An embodiment comprises detecting:
a user drag input in a user-defined displacement on the interactive graphic scatterplot, or
two user inputs in the first visualisation dimension, in particular two user clicks, and detecting two user inputs in the second visualisation dimension, in particular two user clicks;
for defining the two-dimensional selection within the displayed interactive graphic scatterplot.

In an embodiment, receiving from the user a two-dimensional selection displays two tags on a first axis of the first visualisation dimension of the interactive graphic scatterplot, one for each end of a first dimension of the two-dimensional selection, and displays two tags on a second axis of the second visualisation dimension of the interactive graphic scatterplot, one for each end of a second dimension of the two-dimensional selection.

An embodiment comprises receiving from a selective hierarchical categorical filter list a user selected category and/or sub-category, wherein said user selected category and/or sub-category is equivalent to receiving from the user a two-dimensional selection within the displayed interactive graphic scatterplot.

The present disclosure also relates to a non-transitory computer-readable medium comprising computer program instructions for implementing a method for providing a GUI comprising an interactive graphic scatterplot, which when executed by a computer processor, causes the processor to carry out any of the disclosed methods.

The present disclosure also relates to a computer system for providing a GUI comprising an interactive graphic scatterplot, wherein the computer system provides a transactional dataset, arranged for carrying out any of the disclosed methods.

It is also disclosed a computer system for providing a GUI comprising an interactive graphic scatterplot, wherein the computer system provides a transactional dataset, arranged for carrying out any of the disclosed methods.

### BRIEF DESCRIPTION OF THE DRAWINGS

The following figures provide preferred embodiments for illustrating the disclosure and should not be seen as limiting the scope of invention.
**Figure 1****:** View of an embodiment with a scatterplot of a plurality of transactions, referred to as light plot, a count plot, and a sidebar displaying metrics and filters.
**Figure 2****:** Comparison of the change of opacity levels on two alternative exemplary embodiments.
**Figure 3A****:** Representation of an embodiment comprising a scatterplot (or light plot) with rectangular patterns showing a concentration of transactions within specific amount ranges being processed sequentially.
**Figure 3B****:** Representation of an embodiment comprising a scatterplot (or light plot) with a dense block of transactions concentrated at the beginning of the selected time range, tapering off significantly after a certain point.
**Figure 3C****:** Representation of an embodiment comprising a scatterplot (or light plot) displaying horizontal lines with different densities, suggesting that transactions concentrate on rounded values.
**Figure 3D****:** Representation of an embodiment comprising a scatterplot (or light plot) displaying irregular vertical streaks indicating that transactions may have been processed sequentially by value.
**Figure 4A****:** Representation of an embodiment where the graphical scatterplot visualization comprises a grid of dashed lines defining highlightable regions, and where each of the highlighted regions comprises non-compliant transactions.
**Figure 4B****:** Representation of an embodiment where the graphical scatterplot visualization comprises highlighted points, each point corresponding to a non-compliant transaction, and comprising non-compliant overlaid histograms in each of the axis histogram.
Figure 4C: Representation of an embodiment where highlighted points, each point corresponding to a non-compliant transaction, are selected regions of the graphical scatterplot, said region being of a minimal time period.
Figure 4D: Representation of an embodiment where the graphical scatterplot visualization comprises highlighted regions of said scatterplot, where non-compliant transactions are present, and a non-compliance heatmap displaying, in a grid, a relative quantity indication of non-compliance transaction presence.
Figure 4E: Zoomed view representation of the non-compliance heatmap present in the embodiment represented in Figure 4D.
Figure 5: Representation of an interface of an embodiment with filters being applied to a dense section of the light plot.
Figure 6: Representation of an embodiment where data points are plotted on the light plot, i.e., the scatterplot, by means of an octree without adaptive gradient opacity.
Figure 7: Representation of embodiments of point clouds represented in the light plot, i.e., scatterplot, with various opacity levels.
Figure 8A: Plot comparing *baseOpacity* with normalized depth (which is the node depth value divided by the maximum depth, *maxDepth,* value), for different *K* values.
Figure 8B: Plot comparing *baseOpacity* with normalized depth, for different *zoomLevel* values, with K = 10.
Figure 8C: Plot comparing the Example of maximum and minimum opacity values by zoom level of an exemplary embodiment.
Figure 8D: Schematic representation of an octree, from an embodiment, wherein said octree data structure stores retrieved transactions.

### DETAILED DESCRIPTION

The present disclosure relates to a computer-implemented method for generating a Graphic User Interface, GUI, comprising an interactive graphic scatterplot for a transactional dataset on a computer system.

In reference [15], Munzner proposes a framework that structures visualization design and evaluation into four nested levels: (1) characterizing the domain problem, (2) abstracting tasks into operations and data types, (3) designing visual encoding and interaction techniques, and (4) designing algorithms for efficient execution. Each level depends on the accuracy of the decisions made in the preceding one, ensuring that errors propagate downstream if not addressed early.

The present disclosure follows Munzner's structured approach to visualization, ensuring that it effectively tackles domain-specific challenges in outlier detection, i.e., detection of misconduct or non-compliance in transactions. In alignment with this framework, an exemplary embodiment maintains sound data abstraction, employs appropriate visual techniques, and optimizes large-scale dataset rendering.

An embodiment is designed to help users analyse large volumes of transaction data (e.g., hundreds of millions of transaction data instances) using an interactive scatterplot visualization combined with a sidebar dashboard, as disclosed herein.

The present disclosure also outlines possible embodiments comprising the scatterplot visualization and the sidebar dashboard, which aim to support the identification of non-compliant transactions in a transactional dataset and provides a better contextualization and understanding of said dataset. By making the sidebar content customizable and dynamic, users can access the most relevant information for their case studies which can streamline the analysis process.

The following pertains to task analysis and interface design. Users of the present disclosure include analysts and data scientists who work in the context of fraud investigation. These users must identify emerging trends, unusual behaviors, data anomalies, and outliers within large datasets, often composed of millions of transactions. The context demands fast and iterative exploration combined with precise filtering, comparative analysis, and result sharing.

To meet these requirements, a preferential embodiment combines visual and interaction design patterns that directly support the tasks outlined in Shneiderman's taxonomy [21]. The interface is structured to allow seamless transitions between levels of detail, with interactive elements guiding users through exploration and hypothesis validation.

Based on results from exploratory interviews with a group of experts, the present disclosure maps this taxonomy with the core tasks supported by a preferential embodiment, and the visual elements that enable said core tasks.

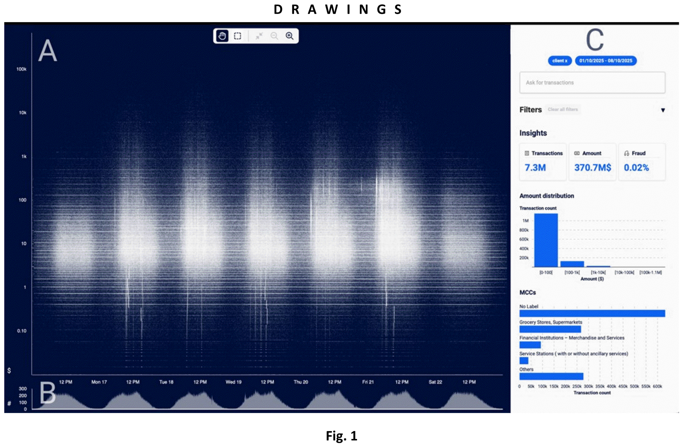

**Figure 1** represents a view of the present disclosure with a scatterplot of a plurality of transactions, referred to as light plot, a count plot, and a sidebar displaying metrics and filters.

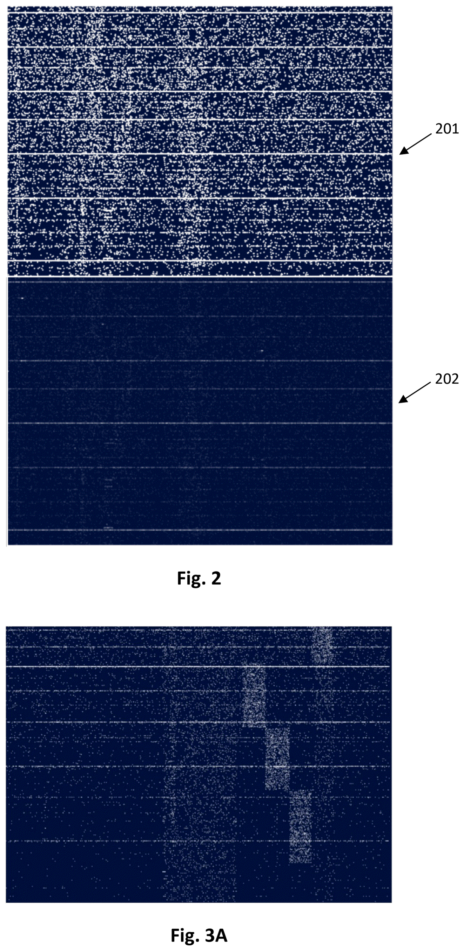

The following pertains to the Overview Task of the task analysis and interface design. In Shneiderman's visual information-seeking mantra, an overview first encourages users to gain a broad understanding of the dataset before diving into details. In an embodiment, there are two ways in which users can make sense of the data at first glance, which are shown in **Figure 1****.** First, it allows users to quickly assess overall transaction activity using the landing page, where daily transaction counts per dataset are displayed. Upon selecting the dataset, the main light plot, A, provides a bird's-eye view of all transactions, where each point represents a transaction, with time on the x axis and amount on the y axis. **Figures 3A to 3D** represent various point distribution patterns on the light plot A, i.e. of the scatterplot displaying a large transactional dataset. The count plot, B, vertically stacked with the time axis of the light plot, shows the transaction counts for both the entire dataset and the user selections. It allows users to understand the concentration of data over time and to identify spikes. Consider an example of a dataset being presented in an embodiment, where a timeline of transactions reveals periodic horizontal clusters of points forming shapes that resemble line segments. Those clusters of transactions occur at fixed intervals every night. The analyst wants to understand what is going on in this subset of data.

**Figure 2** represents a comparison of the change of opacity levels on two alternative exemplary embodiments, where: **201** represents an embodiment of the scatterplot with maximum point opacity (or no point transparency), and **202** represents an embodiment of the scatterplot with maximum point opacity (or no point transparency).

The following pertains to the Zoom and Filter of the task analysis and interface design. An embodiment supports both navigation and selection modes. In the navigation mode, users can pan and zoom in on areas of interest in the light plot. The opacity of the points, automatically determined depending on the zoom level, can also be manually adjusted, allowing the analyst to reduce visual noise and focus on dense patterns in the data, as exemplified in **Figure 2****.** In the selection mode, users can draw a rectangle to isolate and apply time/amount filters. Interactive tags can be dragged along the axes to change filters and allow further refinement. In addition, users can apply manual filters via sliders and a tag-based user interface for categories on the sidebar. Consider, for instance, a case of interaction between the user and an embodiment of the present disclosure. Herein, he decides to filter by the time period and amount interval the displayed dataset, and in doing so, some of those horizontal lines appear and manually adjust opacity to remove noise from the selection.

The following pertains to the Details on Demand of the task analysis and interface design. The sidebar's insights panel, C, as exemplified in **Figure 1****,** displays statistics on selected transactions, including transaction counts, total amounts, percentages of illegitimate or non-compliant transactions, histograms, and merchant category counts. These statistics update as filters change, enabling users to view both global and filtered data summaries. As an exemplary embodiment, a user examining the insights of one of the identified horizontal clusters may see that almost all transactional instances have the same merchant category code and have not been labelled as malicious and/or non-compliant, indicating batch processing rather than malicious activity.

The following pertains to the task analysis and interface design. In an embodiment, when a subset of data is selected, said selected portion of the dataset can be compared with the full dataset or with other selections. In the sidebar, comparison values for all the features of the data are shown. An embodiment that may exemplify this is a case were comparison of the transactions with other selections of the same shape, selections also performed interactively by a given user, shows that all selections share similar characteristics.

The following pertains to the history of the task analysis and interface design. In an embodiment, users can fine-tune selections by saving and going back and forth on the history of filters. This allows users to share how they reach a specific subset of the data, restart from a point in their analysis, or re-apply the filtering to a different subset of data. In an exemplary embodiment, a user may save a filter. At a later instance, when revisiting the case, the user can apply the saved filter to a different time range, finding that the same pattern repeats consistently over months. This confirms that transactions are part of an automated batch process rather than a malicious and/or non-compliant activity.

The following pertains to the Extract of the task analysis and interface design. In an embodiment, users can export summary insights to document findings, share analyses with stakeholders, or create rule proposals to inform downstream non-compliant transaction systems. In an exemplary embodiment, exporting the analysis may allow a user to document the analysis case and create a new rule to cover these types of events.

The following pertains to the system architecture of the present disclosure, which is engineered to handle high-volume transaction data quickly with speed and precision, supporting millions of data points.

The following pertains to the canvas rendering details of the system architecture. An embodiment renders tens of millions of points on the screen by using three.js [8], a WebGL-based visualization library. The setup of this process begins with defining the core components required for rendering, including coordinate scales, a virtual camera, and scene management. The visualization uses D3.js [6] scales to map transaction timestamps and amounts to the appropriate screen coordinates.

**Figure 3A** represents a part of the scatterplot (or light plot) of an embodiment, with rectangular patterns showing a concentration of transactions within specific amount ranges being processed sequentially.

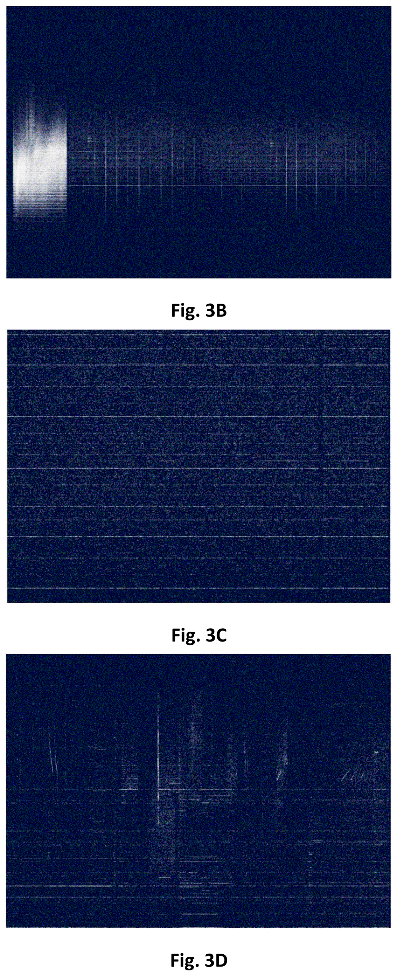

**Figure 3B** represents a part of the scatterplot (or light plot) with a dense block of transactions concentrated at the beginning of the selected time range, tapering off significantly after a certain point.

**Figure 3C** represents a part of the scatterplot (or light plot) displaying horizontal lines with different densities, suggesting that transactions concentrate on rounded values.

**Figure 3D** represents a part of the scatterplot (or light plot) displaying irregular vertical streaks indicating that transactions may have been processed sequentially by value.

In an embodiment, a perspective camera is used to provide a flexible viewing experience, with its initial zoom level and position configured to ensure that the entire dataset remains visible upon initialization. Transactions are rendered using a point-based geometry to render clouds of light, with circular point sprites with transparency, ensuring clarity even in areas with high densities. The transparency of the points changes with zooming, allowing both for a macro view of the transaction clouds and for the detailed analysis of specific subsets of data, as exemplified in **Figures 3A****,** **3B, 3C** and **3D****.** Furthermore, an embodiment employs a dual-scene architecture, separating the main transaction data from selected data points that need to be highlighted. This separation of layers allows highlighted transactions to persist visually over the primary dataset without occlusion.

In an embodiment, zooming and panning interactions are facilitated through the zoom behavior of D3.js, which dynamically adjusts the camera position and scale while ensuring that transaction points remain legible across different zoom levels. These interactions trigger real-time recalculations of data mappings, dynamically adjusting the size and positioning of elements.

In an embodiment, to maintain visibility of the points for all zoom levels, while keeping both the detailed shapes of the clouds of light when zoomed out, and the ability to visualize individual points when zoomed in, adaptive zoom scaling is used, meaning that the size of data points changes according to the level of zoom being applied. When filters are applied, selected points change to a brighter color, while the remaining points change to a darker color, improving contrast, and highlighting the selection for the user.

The following pertains to the visualization of non-compliant transactions. The representation of non-compliant transactions in large datasets is visually challenging because, usually, such transactions make up less than 1% of the total amount of transactions present in said dataset, making them almost invisible with standard techniques alone, such as color coding or symbol categorization. Herein, some possible embodiments, which overcome this challenge, are described.

An embodiment may display non-compliance areas which are identified in the graphic user interface scatterplot. This display comprises a layered approach, with more detail being shown as a user drills down the stacked levels (i.e., zooms in on an identified are with non-compliant transactions) to render the data points. In an embodiment where data instances are stored in a tree-based structure variable in memory, an alternative way of highlighting the presence of non-compliant transactions is required at higher levels, due to its sampling property.

In an embodiment, when visualizing very large datasets, rendering every point at once is impractical, and instead, points are selectively displayed as users zoom or filter, which can obscure rare but critical events, such as non-compliant transactions at higher levels. To address this, an embodiment may highlight regions, i.e., "areas" of the interactive light plot, or scatterplot, containing non-compliant transactions, whether already visible or present in deeper layers not yet displayed, rather than attempting to plot every single point of the received dataset from the computer system. This ensures that an overview of non-compliance distribution is always available across all levels.

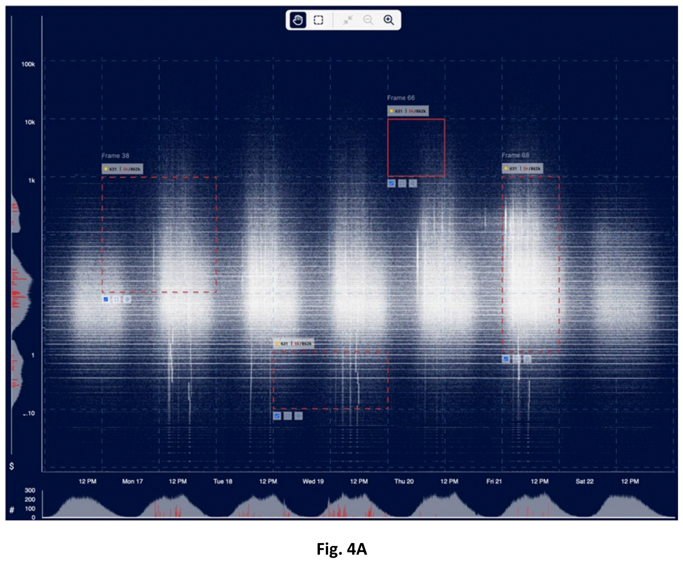

**Figure 4A** represents an embodiment where the graphical scatterplot visualization comprises a grid of dashed lines defining highlightable regions, and where each of the highlighted regions comprises non-compliant transactions.

To achieve this, an embodiment may subdivide the scatterplot visualization area into a grid, identified by thin dashed lines which are displayed in the scatterplot area, but may optionally be hidden. Said grid may define the regions to be highlighted. Each identified region is marked with a dashed outline and is combined with one small summary panel offering key insights descriptors, namely average score, amount of non-compliant/total transactions, and three actions: selection, zoom-to-fit, and additional information, as represented in **Figure 4A****.** These components provide a quick overview of each area's transactions, while also enabling a fast, intuitive exploration with said grid-based identified regions.

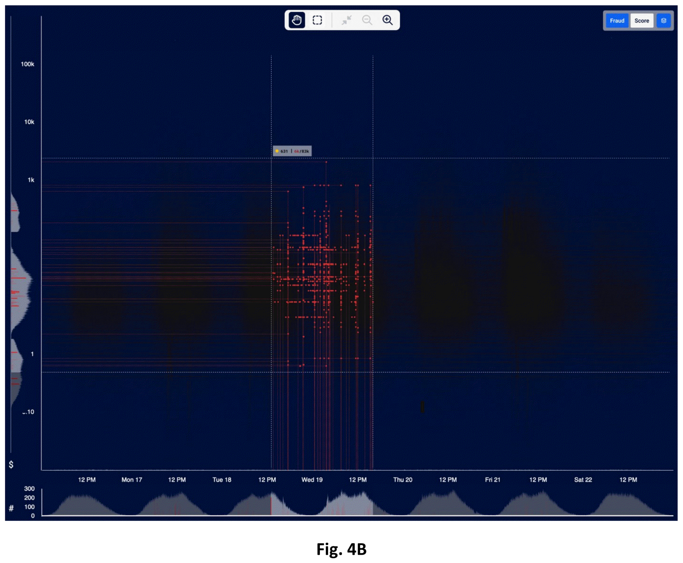

**Figure 4B** represents an embodiment where the graphical scatterplot visualization comprises highlighted points, each point corresponding to a non-compliant transaction, and comprising non-compliant overlaid histograms in each of the axis histogram.

An embodiment may display non-compliant transactions in axes highlighting. In an embodiment, non-compliant region highlighting is present, and non-compliant occurrences are also recorded on both axes' histograms, being the horizontal axis, i.e., the x-axis a representation of time and the vertical axis, i.e., the y-axis a representation of a transactional amount/quantity, as represented in **Figure 4B****,** enabling users to track their distribution over each dimension.

In an embodiment, when using the middle toolbar option to select areas in the scatterplot, the cross-axis highlighting of non-compliant transaction occurrences provides a visual cue to uncover correlations between time and transaction amount. This bi-dimensional linkage, done with the help of lines connecting each highlighted point to each of the two axes, as represented in **Figure 4B****,** allows analysts to not only detect peaks and outliers but also to immediately identify whether suspicious patterns may occur across both dimensions, offering faster and more intuitive correlation discoveries than one-axis approaches.

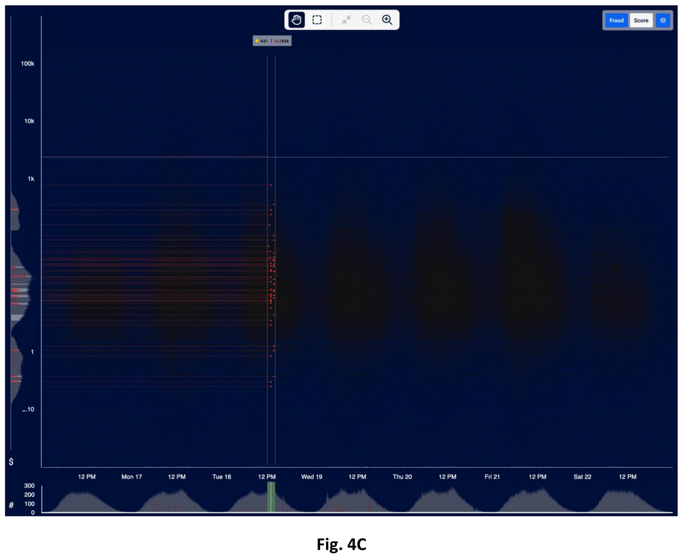

**Figure 4C** represents an embodiment where highlighted points, each point corresponding to a non-compliant transaction, are selected region of the graphical scatterplot, said region being of a minimal time period.

In an embodiment, the same behavior applies and can be initiated by clicking on one of the two axes. In an embodiment, by default, a minimum time interval is applied, and the corresponding points on the other axis are highlighted with the same guidelines. This one-sided selection offers a quick way for a user to select an entire vertical or horizontal windows of interest, alternative to the selection approach provided by the top-middle toolbar for the same purpose, thus streamlining the user experience by reducing repetitive interactions. These short selections, whether by time or amount, may be particularly useful for exposing one-sided correlations, by means of displaying an overlaid non-compliant transactional amount histogram on top of the transactional amount histogram next to the transactional amount axis of the graphical scatterplot, and clarifying the relationship between the two attributes. The displayed overlapping histogram with the selected transactions may be a histogram with the retrieved non-compliant transactions.

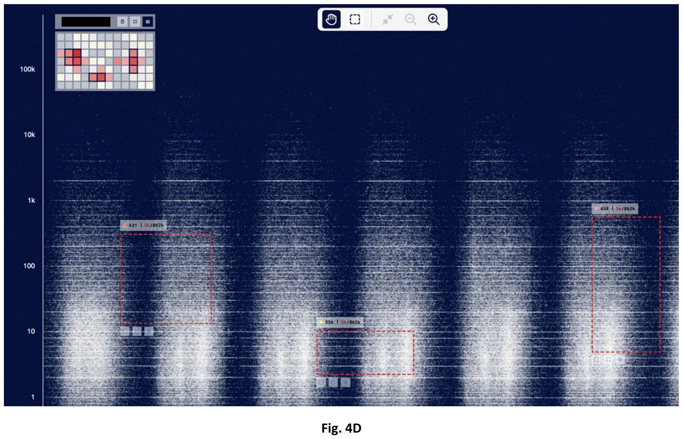

**Figure 4D** represents an embodiment where the graphical scatterplot visualization comprises highlighted regions of said scatterplot where non-compliant transactions are present, and a non-compliance heatmap displaying, in a grid, a relative quantity indication of non-compliance transaction presence.

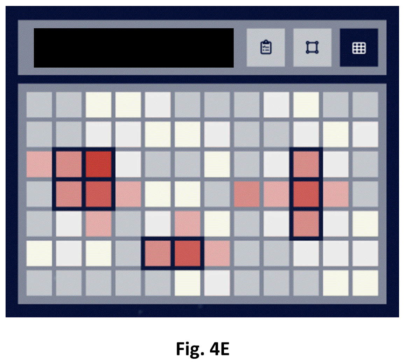

**Figure 4E** represents a zoomed view of the non-compliance heatmap present in the embodiment represented in **Figure 4D****.**

An embodiment may display a two-class heatmap to indicate regions of the graphical scatterplot visualization where the two classes are located, as represented in **Figure 4D****.** Herein, a zoomed representation of said two-class heatmap is represented in **Figure 4E****.** In an embodiment, the heatmap visualization of the areas of the graphical scatterplot comprising non-compliant transactions are highlighted with the same background color alongside score distribution across the entire dataset, so that these non-compliant transaction-rich areas are colored with a color gradient, e.g., a grey-yellow-red color gradient. This enables rapid assessment of relationships between non-compliance/score, and the time/amount properties, while also revealing anomalous or outlier regions.

In an embodiment, the non-compliance/score heatmap combines non-compliant area indicators and score distributions in a single view. Unlike traditional heatmaps that visualize only one variable, an embodiment employs dual-layer encoding to simultaneously reveal non-compliance clusters and score patterns. This enables analysts to quickly identify global correlations while also examining more detailed score distributions at the local level, within each area.

The non-compliant transaction region-indicator may comprise a first data-field, said first data-field being a count of the non-compliant transaction located in the region of the interactive graphic scatterplot; and a second data-field, said second data-field being a sum of the amount of non-compliant transactions comprised in the indicated region.

The following pertains to the Data querying details of the System Architecture. In an embodiment, the backend is designed to efficiently handle large-scale transaction data. When new filters are applied to the data, the backend automatically converts those filters to new queries to the database and returns the points to be highlighted, the new counts for the count plot, and the new insights for the sidebar.

To achieve this, an embodiment may leverage frameworks like Quarkus [11], which is a native Kubernetes Java framework optimized for high performance and low memory footprint. For data query and processing, an embodiment may use DuckDB [17], an in-memory analytical database engine designed for fast ad hoc querying of large datasets. DuckDB provides high-performance vectorized execution, allowing for the retrieval and filtering of millions of transactions almost instantly, without the need for pre-aggregations. Its columnar storage and efficient query optimization ensures that users can apply complex filters and selections interactively without significant latency.

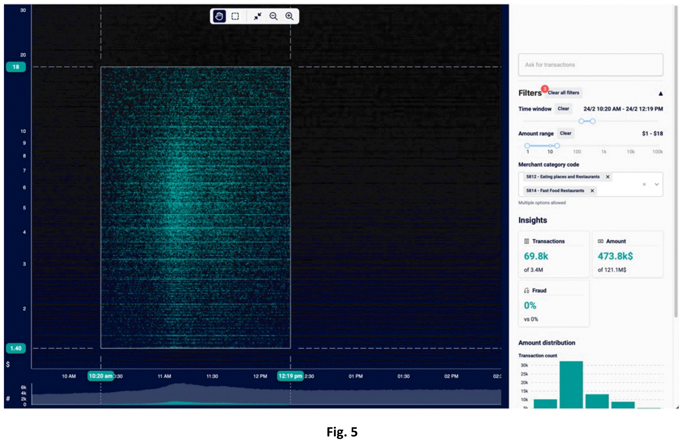

**Figure 5** represents an interface of an embodiment with filters being applied to a dense section of the light plot.

The following pertains to an octree data structure for displaying a large transactional dataset on the light plot, i.e., on the scatterplot. An embodiment uses octrees as a hierarchical spatial data structure to efficiently render and visualize large-scale point cloud datasets containing up to billions of transaction data points. The octree enables progressive Level-of-Detail (LOD) loading, allowing the system to display millions of points with real-time interaction. Herein, an octree is a tree data structure, wherein each internal node, corresponding to a geometrical octant, has exactly eight child nodes, i.e., sub-octants. In alternate embodiments, quadtree data structures could be used instead of octree data structures, as an alternative. Other tree data structures may also be used if configured and compatible with the present disclosure.

In an embodiment, the backend generates octree structures from transaction data, while the frontend progressively loads octree nodes on-demand, based on the camera position and on the zoom level. Shallow nodes are loaded first for overview visualization, and deeper nodes are progressively loaded as the user zooms in on a given region of the scatterplot and wants to see data in more detail in the zoomed region.

In an embodiment, the construction of the octree begins by determining the overall spatial extent of the dataset and dividing it into a cubic root node. Each node is recursively subdivided into eight smaller cubic regions, referred to as child nodes or leaf nodes, whenever the number of data points within a node exceeds a pre-defined maximum of points per node threshold. This process continues until all points are attributed to a node. To generate representative subsets of data for each level of detail, the system applies a Poisson sampling strategy that enforces a minimum distance between selected points within each node. The sampling is performed bottom-up, where coarser levels are created by subsampling finer ones while maintaining consistent spatial coverage.

In an embodiment, during visualization, the rendering system employs a point budget mechanism that controls the total number of points displayed at any given time. Each octree node contains a specific number of points, and the system intelligently selects which nodes are rendered based on the current viewport, camera position, and zoom level. Deeper nodes in the hierarchy contain fewer points but provide higher spatial resolution, while shallower nodes contain more points but offer broader coverage. This adaptive loading strategy ensures that users can interact with massive datasets in real-time, while maintaining visual fidelity appropriate to their current viewing context.

In an embodiment, the implementation of an octree in a scatterplot comes with different interaction and data visualization challenges, namely the challenge of handling opacity in the different millions of points with different LODs , and the additional challenge of handling zoom interactions.

The following pertains to an adaptive gradient opacity associated with the octree data structure. An embodiment uses uniform transparency, i.e., a transparency/opacity value that is equal for all points. Note that the terms "transparency" and "opacity" are interchangeable, since a transparency variable is seen as a complementary variable to the opacity variable, i.e., the sum of the transparency and opacity variables is equal to 1. This approach allows users to discern between areas with variable levels of data density, where denser areas appeared more opaque due to point overlap.

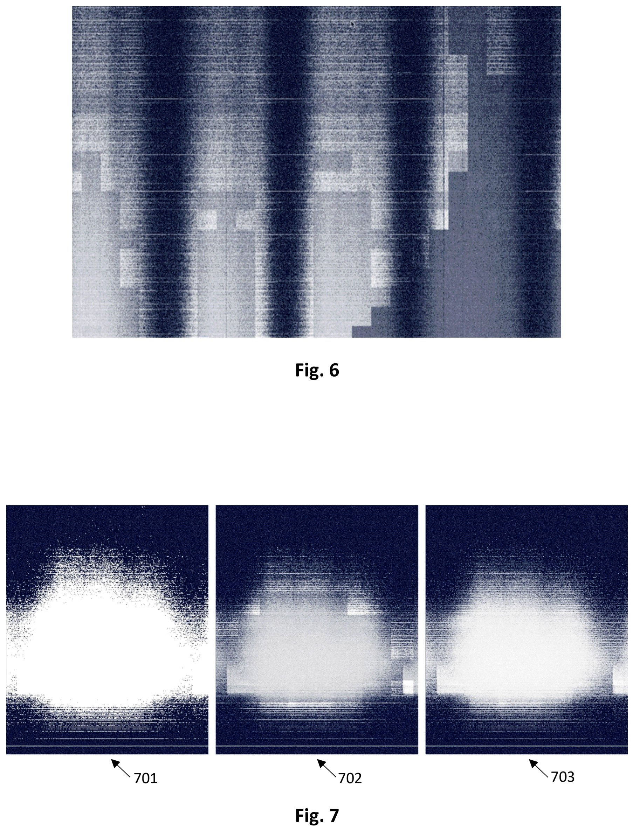

**Figure 6** represents an embodiment where data points are plotted on the light plot, i.e., the scatterplot, by means of an octree without adaptive gradient opacity.

In an embodiment comprising octree-based level-of-detail (LOD) loading, uniform transparency creates a critical visual artifact, where, as the octree progressively loads, areas that have loaded more detailed nodes of points appear artificially denser than areas still showing less detailed nodes, even when the actual data density is identical. This artifact is particularly more visible in "border" areas between octree nodes, where a border-contrasting line of the scatterplot, or equivalent distinguishable border-contrasting element on said scatterplot, is visible and corresponds to a border separating two scatterplot areas, each corresponding to a respective octree node.

An embodiment aims to visually highlight data density by making the more densely populated areas brighter, and thus, using uniform opacity may no longer be viable with this octree LOD system.

In an embodiment, viewing requirements change with the user-defined zoom level of what is being displayed in the scatterplot. At a low zoom, namely when the full range of data is rendered on the screen, a clear opacity variation is adopted to understand structure in the compressed view while, at high zoom, i.e., close up, the opacity variation should prevent deep nodes from becoming too transparent and hiding important detail.

**Figure 7** represents embodiments of point clouds represented in the light plot, i.e., scatterplot, with various opacity levels, where: **701** represents an embodiment where the data points of the point cloud have no opacity; **702** represents an embodiment where the data points of the point cloud have uniform opacity; and **703** represents an embodiment where the data points of the point cloud have adaptive gradient opacity.

In an embodiment, the adaptive gradient opacity improves the data point visualization, with the help of octree LOD, by making node depth level the primary determinant of opacity, thus adjusting the aforementioned octree-based LOD loading. In particular, this breaks the false density perception caused by LOD loading.

In an embodiment, by making deeper, i.e., more detailed, nodes more transparent than shallower, i.e., coarse, nodes, the visual weight of overlapping detailed points is reduced, while preventing false density signals, particularly those in areas with loaded detail, from appearing artificially dense.

In an embodiment, the depth and zoom adaptive opacity is calculated by the following formulas: $opacity = \left\{\begin{matrix}baseOpacity , if the node has children in the octree \\ baseOpacity ∗ leafMultiplier , if the node is a leaf in the octree\end{matrix}\right.$ where variables *baseOpacity* is the default opacity for all points in nodes of a certain depth in the octree and *leaf Multiplier* is an opacity multiplier for points in nodes in areas completely loaded, which is necessary to attenuate the perceived different opacity between points in these areas and points in areas that are "incompletely" loaded. These variables are defined below: $baseOpacity = maxOpacity - logDepthRatio ∗ \left(maxOpacity-minOpacity\right) ,$ $\begin{matrix}leafMultiplier \\ = MinLeafMultiplier + zoomFactor ∗ \left(\begin{matrix}MaxLeafMultiplier \\ - MinLeafMultiplier\end{matrix}\right) ,\end{matrix}$ $logDepthRatio = \frac{log \left(depthRatio∗K+1\right)}{log \left(K+1\right)} , and depthRatio = \frac{nodeDepth}{maxDepth}$ $maxOpacity = {MaxOpacity}_{initial} + zoomFactor ∗ \left(TargetOpacity-{MaxOpacity}_{initial}\right) ,$ $minOpacity = {MinOpacity}_{initial} + zoomFactor ∗ \left(TargetOpacity-{MinOpacity}_{initial}\right) ,$ $zoomFactor = \frac{zoomLevel - 1}{MaxZoom - 1} ,$ $MaxZoom > 1 and zoomlevel > = 1 .$ It is noted that variables that start in upper-case are defined as constants throughout an user's interaction. Note that the *leaf Multiplier* is applied on nodes of the octree data structure that comprises leaf nodes, regardless of how many leaf nodes are present, i.e., how many levels of branching nodes are present in said structure. Variables *MaxLeafMultiplier* and *MinLeafMultiplier* refer to the opacity multiplier for nodes without children, when the scatterplot is first loaded, which corresponds to a zoom level of 1x, and on *MaxZoom,* respectively, while variables *MaxOpacityᵢₙᵢₜᵢₐₗ* and *MinOpacityᵢₙᵢₜᵢₐₗ* refer to the opacity values of points in the shallowest and deepest nodes in the octree, respectively, when the scatterplot is first loaded, i.e., when the zoom level is of 1x. This means that a maximum opacity is applied to shallower nodes in the octree, and minimum opacity is applied to deeper nodes of the octree. Variable *TargetOpacity* is the opacity value when the *MaxZoom* level is reached. Variable *nodeDepth* is, for each point, the depth of the node it belongs to in the octree, while variable *maxDepth* is the depth of the deepest node in the octree. Variable K is a constant that defines the curve shape of the gradient. Variable *zoomFactor* controls, for each *zoomLevel,* how much opacity is to be applied. In this manner, variable *zoomFactor* defines what is the value of *maxOpacity,* given that, mathematically, said value lies between the [*TargetOpacity, MaxOpacityᵢₙᵢₜᵢₐₗ*] range. Likewise, *zoomFactor* defines the value of *minOpacity,* which lies between the [*MinOpacityᵢₙᵢₜᵢₐₗ, TargetOpacity]* range. Furthermore, variable *zoomFactor* defines how much is the *leaf Multiplier* value, conditional that it is between the [*MinLeafMultiplier, MaxLeafMultiplier*] range. Finally, variable *MaxZoom* is the zoom level from which the target opacity value, *TargetOpacity,* and *MinLeafMultiplier* is reached.

The following pertains to guiding principles of an adaptive gradient opacity. In an embodiment, the system uses four key principles to adapt this gradient to different zoom contexts. A first principle is opacity convergence, where both minimum and maximum opacity values linearly converge toward a single target opacity as zoom increases: $maxOpacity \to TargetOpacity , and minOpacity \to TargetOpacity$

In an embodiment, when the maximum and minimum opacity values meet at a maximum zoom, the gradient disappears, making all points have the same opacity. This contributes to full point visibility when the visualization is less dense.

In an embodiment, at low zoom, i.e., when zoomed-out, a Strong gradient is adopted to counteract LOD overlap artifacts, while, at high zoom, i.e., when examining a detail closely, all LOD levels are typically loaded, and depth-based transparency becomes counterproductive as it hides the detail the user is trying to see.

A second principle is a logarithmic depth mapping, where, instead of a linear depth ratio, a logarithmic transformation may be applied to keep shallow nodes opaque for longer, and to create a smoother, more natural-looking transition.

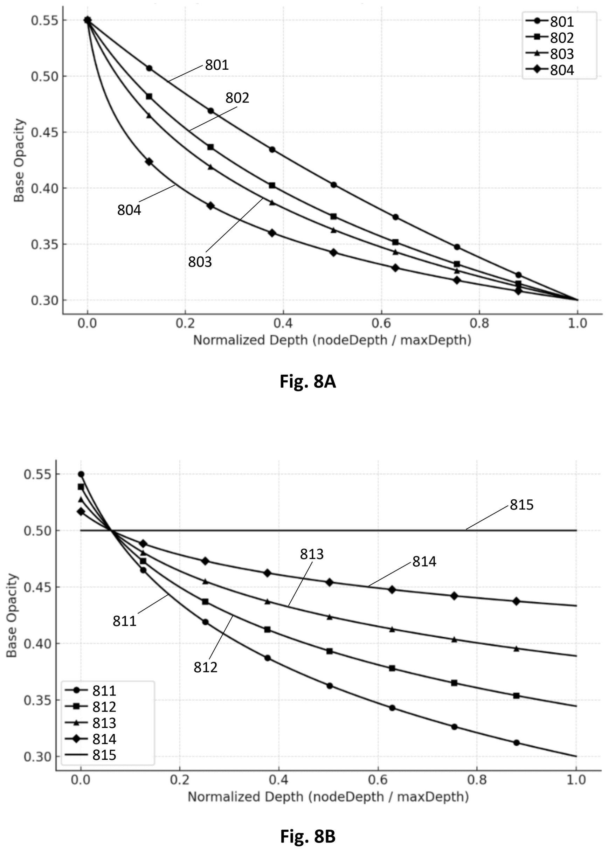

**Figure 8A** represents a plot comparing *baseOpacity* with normalized depth (which is the node depth value divided by the maximum depth, *maxDepth,* value) for different *K* values, where: **801** represents the curve where *K =* 1; **802** represents the curve where *K =* 5; **803** represents the curve where *K =* 10; and **804** represents the curve where *K =* 50.

**Figure 8B** represents a plot comparing *baseOpacity* with normalized depth (which is the node depth value divided by the maximum depth, *maxDepth,* value) for different *zoomLevel* values, with *K =* 10, where: **811** represents the curve with a zoom level of 1x, i.e., *zoomLevel =* 1; **812** represents the curve with a zoom level of 3x, i.e., *zoomLevel* = 3; **813** represents the curve with a zoom level of 5x, i.e., *zoomLevel =* 5; **814** represents the curve with a zoom level of 7x, i.e., *zoomLevel =* 7; and **815** represents the curve with a zoom level of 10x, i.e., *zoomLevel =* 10.

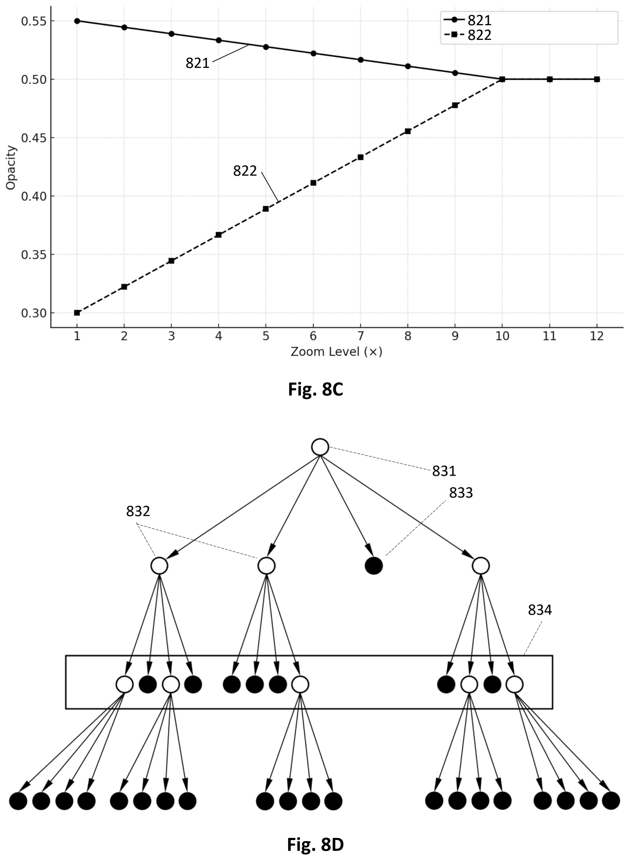

**Figure 8C** represents a plot comparing the maximum and minimum opacity values by zoom level of an exemplary embodiment, where: **821** represents the trend of the maximum opacity values, *maxOpacity,* which corresponds to the opacity of the shallower nodes; and **822** represents the trend of the minimum opacity values, *minOpacity,* which corresponds to the opacity of the deeper nodes.

**Figure 8D** schematically represents an octree, from an embodiment, wherein said octree data structure stores retrieved transactions, where: **831** represents a root node; **832** represents leaf nodes requiring a subdivision into leaf nodes of said octree nodes, for storing more points than a maximum point-limit; **833** represents a leaf node where all data points are stored without requiring a subdivision of the octree node; and **834** represents a maximum depth level being displayed. As disclosed, opacity is obtained as *baseOpacity***leafMultiplier,* if the node has children in the octree, or only *baseOpacity* if the node is a leaf in the octree.

A third principle is a zoom-based gradient. In an embodiment, zoom affects the gradient range, but the logarithmic curve shape remains consistent. In this manner, variable *zoomFactor* controls the opacity gradient difference of points of differing depth in the octree, i.e., the range of *baseOpacity* values as a function of the *zoomLevel,* as exemplified in the plot of **Figure 8B****.** Variable K, meanwhile, controls how gradient is distributed for nodes of differing depth, *nodeDepth ,* i.e., the shape of the *baseOpacity* curve shape for a specific zoom level, as exemplified in the plot of **Figure 8A****.**

In an embodiment, the linear interpolation for zoom ensures a smooth behaviour. At *zoomFactor =* 0, there is a full gradient and a more contrasting separation between points with different depth, while at *zoomFactor* =1, there is no separation at all, since points have the same opacity.

A fourth principle is that of leaf node opacity attenuation. In an embodiment, the octree's adaptive loading creates an additional visual artifact, where fully loaded regions appear artificially dense, when compared to partially loaded regions, even when these are at the same depth level. In the octree structure, parent nodes can be separated, containing points from regions that further subdivide, from leaf nodes that have already been fully subdivided and have no further children. Based on that, a zoom-dependent multiplier, that reduces the opacity of specifically leaf nodes, can be applied. As the user zooms, this multiplier reduces, allowing users to see the full detail.

The following pertains to a boundary-respecting zooming. In addition to the four guiding principles, an embodiment comprising the disclosed zoom mechanism ensures that data boundaries are respected by restricting the visible area to the global minimum and maximum values for each plotted variable. Zoom is typically implemented as if the plotted area were an infinite canvas without well-defined boundaries. In this case, the data limits and the chart aspect ratio are respected. In practice, this boundary-respecting zooming algorithm prevents areas outside the data distribution from appearing on the scatterplot, thus avoiding misinterpretations.

In an embodiment, when the user zooms in or out using the toolbar, the zoom originates from the center of the chart, manipulating only the camera's Z-axis and automatically respecting the data boundaries.

In an embodiment, when using the mouse wheel, however, the zoom originates from the mouse's (X, Y) coordinates to bring the user's area of interest closer or move it farther away. If the mouse position changes during successive zooms, or if panning occurs, the initial center position for zooming is lost, and the current cursor position becomes the new center for zooming in or out in the scatterplot. When zooming in, the data boundaries are automatically respected. However, to respect the data boundaries and ensure the chart's aspect ratio is maintained when zooming out, the camera's X and Y values are also adjusted, if necessary, in addition to its Z-axis value. These two values are calculated based on the new Z-axis value, the field of view, the minimum and maximum values of the X and Y axes, and the new visible width and height of the data (computed from the total width and height). This way, the camera is adjusted just enough for the points' boundaries to align with the global minimum and maximum axis values when visible, preventing areas outside the data distribution from appearing due to the chart's aspect ratio being maintained without distortion. This zooming out behavior is formulated as follows: $FOVrad = \left(cameraFOVdeg∗π\right) / 180$ $newCameraZ = clamp \left(newUnrestrictedCameraZ, minZ, maxZ\right)$ $visibleHeight = 2 ∗ tan \left(FOVrad/2\right) ∗ newCameraZ$ $visibleWidth = visibleHeight ∗ cameraAspectRatio$ 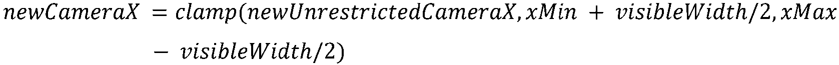 newCameraX = clamp(newUnrestrictedCameraX,xMin + visibleWidth/2,xMax - visibleWidth/2) 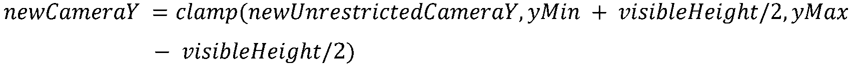 newCameraY = clamp(newUnrestrictedCameraY,yMin + visibleHeightjZ, yMax - visibleHeight/2)

Note that *clamp*() refers to a function for guaranteeing that the camera for visualizing the scatterplot, remains inside the scatterplot, and that *newCameraX, newCameraY* and *newCameraZ* correspond to variables that re-limit the camera window when performing a zoom-out operation.

In the aforementioned set of equations, *xMin, xMax, yMin,* and *yMax* correspond to the minimum and maximum values of each of the octree's domains, i.e., the minimum and maximum normalized data values computed during the octree generation. These values correspond to the minimum and maximum limits of each axis of the scatterplot when not zoomed in.

In an embodiment, the *newCameraZ* variable is obtained from the current camera position and zoom factor: $zoomFactor = \left\{1+s if Δy>0 \left(zoom out\right)1-s if Δy<0 \left(zoom in\right)\right.$ where *s* = 0.1 is the zoom speed parameter. Furthermore, the *newCameraZ* variable is limited to a range between 10, which corresponds to the highly zoomed in state, *minZ,* and the highest possible value that ensures all points are visible on the scatterplot, i.e., the default zoom level, defined in variable *maxZ.* Meanwhile, variables *newUnrestrictedCameraX* and *newUnrestrictedCameraY* are obtained from the current camera position and mouse position.

The present disclosure describes a system for transaction analysis that makes use of a light plot, i.e., a scatterplot, where points are plotted with varying opacity, enabling users to visualize data density through variable brightness, highlighting subtle patterns and anomalies efficiently. This system combines said light plot with summary insights, dynamic filtering, and large dataset support, providing a way to explore complex data.

Initial feedback from experts, product leads, and data scientists confirms the value of the disclosed for surfacing clusters and patterns in transactional-related activity. A consistent theme across interviews was the importance of contextualizing patterns. Users were impressed by the clear visibility of clusters and temporal behaviors, but many emphasized the need to go beyond 'what' is happening and address 'why.' This aligns with a conceptual flow that many users articulated: (1) present the visual data, (2) explain the visual using context and data summaries, and (3) recommend next steps or actions. Incorporating this flow offers a path to more actionable analytics. Re-usability of filters and collaboration between analysts is possible in an embodiment. Furthermore, an embodiment may include the ability to export filtered views and generate shareable reports or URLs that preserve analysis context and filters.

Beyond user feedback, broader system-level challenges, particularly around scalability is important. The current system handles tens of millions of transactions, and may support even larger volumes with performance tuning and canvas abstraction techniques.

In certain embodiments, the hardware-based computer processor is configured to execute software, firmware, or other executable instructions designed to implement the features, methods, or systems disclosed herein. These embodiments may be implemented as standalone devices, as part of a distributed system, or within a cloud computing environment.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on non-transitory computer readable medium having control logic for enabling execution on a computer system having a hardware-based computer processor, such as any of the servers described herein. Such a computer system typically includes memory storage configured to provide output from execution of the code which configures a hardware-based processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

A hardware-based computer processor, as used herein, refers to any system, device, or apparatus capable of processing data in accordance with the methods described in this disclosure. The hardware-based computer data hardware-based processor may include one or more hardware-based processors, such as a central processing unit (CPU), a graphics processing unit (GPU), a digital signal processor (DSP), or any combination thereof. These hardware-based processors may be implemented as a single chip, a multi-core processor, a distributed computing system, or any other suitable configuration. For example, this can be a central processing unit (CPU), such as an Intel^{®} Core^{™} i7 processor, and memory modules, including 16 GB of DDR4 RAM. The system may include a solid-state drive (SSD) for storage, an optional GPU (e.g., NVIDIA^{®} GeForce RTX^{™} 3060), and runs a standard operating system, such as Microsoft^{®} Windows^{®} or Linux^{®}. For example, this can be an embedded system utilizing a microcontroller, such as the ARM^{®} Cortex^{®}-M4 processor, with onboard memory (e.g., 1 MB of flash storage and 256 KB of SRAM). This system operates with real-time operating system (RTOS) software and can be integrated into an industrial device. For example, this can also be a cloud-based virtual machine hosted on a server infrastructure, such as an Amazon Web Services (AWS) EC2 instance, featuring virtual CPUs (vCPUs) based on Intel^{®} Xeon^{®} or AMD EPYC^{™} processors. The instance can be configured for example with 32 GB of RAM, 1 TB of elastic block storage (EBS), and executes server-side software designed to perform the computational processes disclosed in this specification.

The hardware-based computer processor may further include memory (e.g., random access memory (RAM), read-only memory (ROM), flash memory, or other suitable storage devices) for storing instructions and data. The hardware-based processor executes instructions stored in memory to perform the functions described in this specification. The instructions may be implemented in any programming language, including but not limited to assembly language, C, C++, Python, or Java.

The hardware-based computer processor may communicate with input/output devices (e.g., a keyboard, mouse, touchscreen, or display), peripheral devices, or external systems via wired or wireless connections, such as USB, Bluetooth^{®}, Wi-Fi^{®}, or Ethernet. The hardware-based processor may also be integrated with or connected to a network, including a local area network (LAN), wide area network (WAN), or the internet, to receive and transmit data.

The present disclosure is also particularly apt for execution on a GPU - graphics processing unit (a specialized processor explicitly designed for executing graphical algorithms), NPU - neural processing unit (a specialized processor explicitly designed for executing machine learning algorithms), or any other inherently parallel processing unit. For example, models were run on a Linux PC with Intel Xeon CPU cores and a NVIDIA GeForce RTX.

The present disclosure further facilitates efficient implementation on parallel or artificial neunal network specialized hardware architectures, including but not limited to Graphics Processing Units (GPUs), Neural Processing Units (NPUs), and other inherently parallel processing units. GPUs, characterized by a plurality of cores optimized for parallel execution of graphical or matrix-based computations, and NPUs, specifically tailored for the accelerated execution of machine learning algorithms, provide enhanced processing capabilities for the disclosure, in particular the disclosed models. In exemplary embodiments, the models were executed on a computing system comprising a Linux-based operating environment, Intel^{®} Xeon^{®} multi-core central processing units (CPUs), and a NVIDIA^{®} GeForce^{®} RTX-series GPU. The use of such parallel processing or neural network processing units enables a significant reduction in computational latency and an improvement in throughput for the training and inference stages of the disclosed models. Significantly, the disclosed architecture is inherently suited for implementation by parallel processing or neural network processing units.

Consequently, the invention leverages the architectural advantages of parallel processing to achieve enhanced computational efficiency, scalability, and responsiveness, thereby addressing the technical problem of optimizing resource utilization in high-dimensional machine learning tasks.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable. The following dependent claims further set out particular embodiments of the disclosure.

### References

[1] Boost module | Highcharts - highcharts.com. https://www.highcharts.com/docs/a dvanced-chart-features/boost-module. [Accessed 26-03-2025].
[2] plotly.graph_objects.Scattergl 6.0.1 documentation - plotly.github.io. https:// plotly.github.io/plotly.py-docs/generated/plotly.graph_objects.Scattergl.html. [Accessed 26-03-2025].
[3] R. Al-Sayyed, E. Alhenawi, H. Alazzam, A. Wrikat, and D. Suleiman. Mobile money fraud detection using data analysis and visualization techniques. Multimedia Tools and Applications, 83(6):17093-17108, July 2023. doi: 10.1007/s11042-023-16068-4.
[4] A. Arleo, C. Tsigkanos, R. A. Leite, S. Dustdar, S. Miksch, and J. Sorger. Visual exploration of financial data with incremental domain knowledge. Computer Graphics Forum, 42(1):101-116, Nov. 2022. doi: 10.1111/cgf. 14723 2
[5] J. A. Bednar, J. Crail, J. Crist-Harif, P. Rudiger, G. Brener, C. B, I. Thomas, J. Mease, J. Signell, M. Liquet, J.-L. Stevens, B. Collins, A. Thorve, S. Bird, Thuydotm, Esc, Kbowen, Nezar Abdennur, O. Smirnov, S. H. Hansen, Maihde, A. Hawley, A. Oriekhov, A. Ahmadia, B. A. Bragg, C. H. Brandt, C. Tolboom, G. Enno, E. Welch, and J. Bourbeau. holoviz/datashader: Version 0.14.3, 2022. doi: 10.5281/ZENODO. 7331952.
[6] M. Bostock, V. Ogievetsky, and J. Heer. D3: Data-driven documents. IEEE Transactions on Visualization and Computer Graphics, 17(12):2301-2309, 2011.
[7] W. N. Dilla and R. L. Raschke. Data visualization for fraud detection: Practice implications and a call for future research. International Journal of Accounting Information Systems, 16:1-22, Mar. 2015. doi: 10.1016/j.accinf.2015.01.001.
[8] R. C. et al. three.js - javascript 3d library, 2010. Accessed: 2025-03-20.
[9] A. B. Gurvich and A. M. Geller. Firefly: A browser-based interactive 3d data visualization tool for millions of data points. The Astrophysical Journal Supplement Series, 265(2):38, Mar. 2023. doi: 10.3847/1538-4365/acb59f.
[10] C. R. Harris, K. J. Millman, S. J. van der Walt, R. Gommers, P. Virtanen, D. Cournapeau, E. Wieser, J. Taylor, S. Berg, N. J. Smith, R. Kern, M. Picus, S. Hoyer, M. H. van Kerkwijk, M. Brett, A. Haldane, J. F. del Río, M. Wiebe, P. Peterson, P. Gérard-Marchant, K. Sheppard, T. Reddy, W. Weckesser, H. Abbasi, C. Gohlke, and T. E. Oliphant. Array programming with NumPy. Nature, 585(7825):357-362, Sept. 2020. doi: 10.1038/s41586-020-2649-2.
[11] R. Hat. Quarkus - a kubernetes native java stack tailored for openjdk hotspot and graalvm, crafted from the best of breed java libraries and standards. Available at https://quarkus.io/.
[12] F. Lekschas and T. Manz. Jupyter scatter: Interactive exploration of largescale datasets. Journal of Open Source Software, 9(101):7059, Sept. 2024. doi: 10.21105/ joss.07059.
[13] C. Maçãs, E. Polisciuc, and P. Machado. Atovis - a visualisation tool for the detection of financial fraud. Information Visualization, 21(4):371-392, June 2022. doi: 10.1177/14738716221098074.
[14] M. Muller, I. Lange, D. Wang, D. Piorkowski, J. Tsay, Q. V. Liao, C. Dugan, and T. Erickson. How data science workers work with data: Discovery, capture, curation, design, creation. In Proceedings of the 2019 CHI Conference on Human Factors in Computing Systems, CHI '19, p. 1-15. ACM, May 2019. doi: 10.1145/3290605.3300356.
[15] T. Munzner. A nested model for visualization design and validation. IEEE transactions on visualization and computer graphics, 15(6):921-928, 2009.
[16] T. pandas development team. pandas-dev/pandas: Pandas, Feb. 2020. doi: 10.5281/zenodo.3509134
[17] M. Raasveldt and H. Mühleisen. Duckdb: an embeddable analytical database. In Proceedings of the 2019 International Conference on Management of Data, SIGMOD/PODS '19. ACM, June 2019. doi: 10.1145/ 3299869.3320212.
[18] Salesforce. Tablea.
[19] A. Sarikaya and M. Gleicher. Scatterplots: Tasks, data, and designs. IEEE transactions on visualization and computer graphics, 24(1):402-412, 2017.
[20] A. Sarikaya, M. Gleicher, and D. A. Szafir. Design factors for summary visualization in visual analytics. In Computer Graphics Forum, vol. 37, pp. 145-156. Wiley Online Library, 2018.
[21] B. Shneiderman. The eyes have it: a task by data type taxonomy for information visualizations. In Proceedings 1996 IEEE Symposium on Visual Languages, VL-96. IEEE Comput. Soc. Press. doi: 10.1109/vI.1996.545307.
[22] D. Steiner. Scalable visualization of large datasets. PhD thesis, University of Zurich, Zürich, 2018.
[23] W. Tao, X. Hou, A. Sah, L. Battle, R. Chang, and M. Stonebraker. Kyrix-s: Authoring scalable scatterplot visualizations of big data. IEEE Transactions on Visualization and Computer Graphics, 27(2):401-411, 2021. doi: 10.1109/TVCG.2020.3030372.
[24] The Apache Software Foundation. SparkR: R Front End for "Apache Spark", 2024.
[25] C. Xu, X. Liang, Y. Sun, and X. He. Fraudsters beware: Unleashing the power of metaverse technology to uncover financial fraud. International Journal of Human-Computer Interaction, 40(18):4987-5002, July 2023. doi: 10.1080/10447318.2023.2238367.
[26] Schütz, M., Ohrhallinger, S., & Wimmer, M. (2020). Fast Out-of-Core Octree Generation for Massive Point Clouds. Computer Graphics Forum, 39(7), 155-167.
[27] Schuetz, M. (2017). Potree: rendering large point clouds in web browsers.
[28] Gurvich, A. B., & Geller, A. M. (2023). Firefly: a browser-based interactive 3D data visualization tool for millions of data points. The Astrophysical Journal Supplement Series, 265(2), 38.
[29] Tao, W., Hou, X., Sah, A., Battle, L., Chang, R., & Stonebraker, M. (2020). Kyrix-s: Authoring scalable scatterplot visualizations of big data. IEEE Transactions on Visualization and Computer Graphics, 27(2), 401-411.
[30] nomic-ai.. deepscatter: Zoomable, animated scatterplots in the browser that scales over a billion points[Software]. GitHub. https://github.com/nomic-ai/deepscatter

## Claims

1. Computer-implemented method for generating a Graphic User Interface, GUI, comprising an interactive graphic scatterplot for a transactional dataset on a computer system, wherein the GUI has a predetermined display resolution defined in pixels and said transaction dataset comprising a plurality of transactions comprising two fields each defining a visualisation dimension of the interactive graphic scatterplot, the method comprising the steps of:
receiving from a user of the computer system a first range selection for a first dimension of the interactive graphic scatterplot and a second range selection for a second dimension of the interactive graphic scatterplot;
retrieving transactions comprised by a tree data-structure from the transactional dataset within said first range selection for the first dimension and within said second range selection for the second dimension, and wherein the tree data-structure comprises a plurality of node-depth levels, each node-depth level comprising a plurality of nodes, each node comprising a subset of said transactions;
displaying each retrieved transaction as a corresponding data point on said interactive graphic scatterplot with a display opacity, wherein the display opacity is determined as a function of a node-depth level of a node comprising each retrieved transaction.

2. Computer-implemented method according to the previous claim, wherein the display opacity is determined as a monotonically-increasing function of node-depth level, in particular wherein the display opacity is determined as a monotonically-increasing logarithmic function of node-depth level.

3. Computer-implemented method according to the previous claim, wherein the display opacity comprises obtaining an opacity ratio of $logDepthRatio = \frac{log \left(depthRatio∗K+1\right)}{log \left(K+1\right)} , wherein depthRatio = \frac{nodeDepth}{maxDepth} ;$ wherein *nodeDepth* is a node-depth level of the node comprising each retrieved transaction, *maxDepth* is a maximum node-depth level of the tree data-structure, and *K* is a constant defining a gradient of the monotonically-increasing logarithmic function.

4. Computer-implemented method according to any of the previous claims, wherein the display opacity is obtained by $opacity = \left\{\begin{matrix}baseOpacity , if the node is not a leaf in the tree data - structure \\ baseOpacity ∗ leafMultiplier , if the node is a leaf in the tree data - structure\end{matrix}\right. ,$ where *baseOpacity* is a default display opacity for data points in nodes of a certain node-depth level in the tree data-structure, and *leaf Multiplier* is an opacity-multiplier for data points in nodes that are a leaf in the tree data-structure.

5. Computer-implemented method according to any of the previous claims, further comprising detecting a hover point over any part of the interactive graphic scatterplot, detecting a scroll wheel input from the user to enlarge or reduce the interactive graphic scatterplot while hovering over said detected hover point, and displaying the interactive graphic scatterplot with a corresponding enlargement or reduction, thus redefining the first range selection for the first dimension of the interactive graphic scatterplot and redefining the second range selection for the second dimension of the interactive graphic scatterplot, in particular, wherein displaying the interactive graphic scatterplot with a corresponding reduction comprises limiting the first range selection within the received first range selection and limiting the second range selection within the received second range selection.

6. Computer-implemented method according to claims 4 and 5, wherein the opacity-multiplier of nodes, *leaf Multiplier,* and the default display opacity for points in nodes of a certain node-depth level in the tree data-structure, *baseOpacity,* are a function of said enlargement or reduction of the interactive graphic scatterplot and are obtained by: $\begin{matrix}leafMultiplier \\ = MinLeafMultiplier + zoomFactor ∗ \left(\begin{matrix}MaxLeafMultiplier \\ - MinLeafMultiplier\end{matrix}\right) , and\end{matrix}$ $baseOpacity = maxOpacity - logDepthRatio ∗ \left(maxOpacity-minOpacity\right) ,$ where:
*MinLeafMultiplier* is a minimum opacity-multiplier of nodes;
*MaxLeafMultiplier* is a maximum opacity-multiplier of nodes;
*minOpacity* is a minimum display opacity for a current zoom-level, *zoomlevel;*
*maxOpacity* is a maximum display opacity for the current zoom-level, *zoomlevel;*
where the minimum and maximum display opacities are obtained by $maxOpacity = {MaxOpacity}_{initial} + zoomFactor ∗ \left(TargetOpacity-{MaxOpacity}_{initial}\right) ,$ $minOpacity = {MinOpacity}_{initial} + zoomFactor ∗ \left(TargetOpacity-{MinOpacity}_{initial}\right) ,$ wherein $zoomFactor = \frac{zoomLevel - 1}{MaxZoom - 1} ,$
where:
*MinOpacityᵢₙᵢₜᵢₐₗ*is a minimum display opacity when the retrieved transactions are displayed as corresponding data points on the interactive graphic scatterplot;
*MaxOpacityᵢₙᵢₜᵢₐₗ* is a maximum display opacity when the retrieved transactions are displayed as corresponding data points on the interactive graphic scatterplot;
*MaxZoom* is a maximum zoom-level when the interactive graphic scatterplot is fully enlarged; and
*TargetOpacity* is a limit display opacity when the interactive graphic scatterplot is fully enlarged.

7. Computer-implemented method according to any of the previous claims, further comprising:
receiving from the user a two-dimensional selection within the displayed interactive graphic scatterplot;
selecting each of the displayed transactions that have a corresponding data point in the two-dimensional selection within the interactive graphic scatterplot; and
displaying each of the selected transactions as a corresponding data point on the two-dimensional selection within the interactive graphic scatterplot with a display opacity, wherein
the display opacity is determined as a function of a node-depth level of a node comprising each retrieved transaction;
wherein the intensity or colour is different depending on if the retrieved transaction is within the two-dimensional selection.

8. Computer-implemented method according to any of the previous claims, wherein:
each said transaction is comprised in one or more classes, and said method further comprises displaying each transaction as a data point within the interactive graphic scatterplot, wherein the intensity or colour of the datapoint is determined as a function of the corresponding transaction being comprised in a preselected class; and/or
each said transaction is comprised in one or more classes, and said method further comprises displaying a transaction region-indicator on said interactive graphic scatterplot, wherein said transaction region-indicator is placed bounding a region of the interactive graphic scatterplot bounding data points corresponding to transactions comprised in a preselected class.

9. Computer-implemented method according to any of the previous claims, wherein the two fields of each transaction of the plurality of retrieved transactions comprise a corresponding amount and a corresponding time instance of said transaction, in particular wherein the first dimension is a time dimension, and wherein the second dimension is an amount dimension, further in particular the interactive graphic scatterplot comprising a horizontal axis pertaining to the time dimension, and a vertical axis pertaining to the amount dimension.

10. Computer-implemented-method according to any of the previous claims, comprising the preparatory steps of:
retrieving transactions from the transactional dataset; and
obtaining said tree data-structure from the retrieved transactions by distributing the retrieved transactions by nodes of the tree data-structure such that it balances a number of transactions per each node of the tree data-structure;
in particular wherein the step of retrieving transactions from the transactional dataset further comprises the step of storing the retrieved transactions in a volatile memory and the method comprises using the stored transactions in the volatile memory for the step of displaying the retrieved transactions.

11. Computer-implemented method according to any of the previous claims, comprising:
detecting a user drag input along a user-defined displacement on the interactive graphic scatterplot to move the interactive graphic scatterplot in said user-defined displacement, thus redefining the first range selection for the first dimension of the interactive graphic scatterplot and redefining the second range selection for the second dimension of the interactive graphic scatterplot, and to update the displaying of each of the retrieved transactions as a data point on said interactive graphic scatterplot; and/or
detecting:
a user drag input in a user-defined displacement on the interactive graphic scatterplot, or
two user inputs in the first visualisation dimension, in particular two user clicks, and detecting two
user inputs in the second visualisation dimension, in particular two user clicks;
for defining the two-dimensional selection within the displayed interactive graphic scatterplot.

12. Computer-implemented method according to any of the previous claims, further comprising displaying a histogram count of the plurality of retrieved transactions in respect of a visualisation dimension of the interactive graphic scatterplot, and/or further comprising displaying an additional histogram count of the plurality of retrieved transactions in respect of another visualisation dimension of the interactive graphic scatterplot.

13. Computer-implemented method according to claims 7 and 12, further comprising displaying an overlapping histogram with the selected transactions from the two-dimensional selection of the user, wherein the intensity or colour of the overlapping histogram of the selected transactions is different than a histogram of the retrieved transactions.

14. Computer-implemented method according to any of the previous claims, further comprising:
displaying a reference matrix on top of the interactive graphic scatterplot, wherein the non-compliant transaction region-indicator matches one or more cells of the reference matrix; and/or displaying an heatmap plot, said heatmap plot comprising one or more heatmap cells partitioned for a first dimension unit and/or a second dimension unit, each of the one or more heatmap cells corresponding to a respective region of the interactive graphic scatterplot, and each of the one or more heatmap cells being encoded as a function of the number of non-compliant transactions in the respective region of the interactive graphic scatterplot.

15. Computer system for providing a GUI comprising an interactive graphic scatterplot, wherein the computer system provides a transactional dataset, arranged for carrying out the method of any of the claims 1-14.
